(19) Europäisches Patentamt

European Patent Office

Office européen des brevets

(11) Numéro de publication: **0 217 993**

**A1**

(12) **DEMANDE DE BREVET EUROPEEN**

(21) Numéro de dépôt: 85401903.1

(22) Date de dépôt: 30.09.85

(51) Int. Cl.⁴: **F16K 5/06** , F16K 27/06

(43) Date de publication de la demande:
15.04.87 Bulletin 87/16

(84) Etats contractants désignés:
AT BE CH DE GB IT LI LU NL SE

(71) Demandeur: **ST MIHIEL S.A.**
**2, rue de la Marsoupe**
**F-55300 St. Mihiel(FR)**

(72) Inventeur: **Dumez, Roger**
**9, rue du Faubourg Saint Christophe**
**F-55300 Saint-Mihiel(FR)**

(74) Mandataire: **Chauchard, Robert et al**
**c/o Cabinet Malémont 42, avenue du**
**Président Wilson**
**F-75116 Paris(FR)**

(54) **Robinet à obturateur tournant perfectionné, procédé pour son assemblage et obturateur équipant un tel robinet.**

(57) La présente invention concerne un robinet du type comprenant un obturateur tournant (5) encastré à rotation libre entre des sièges étanches (6, 7) formés en saillie à l'intérieur d'une cavité (4) du corps (1) du robinet, respectivement autour des ouvertures (8, 9) des raccords (2, 3) de ce corps qui comporte en outre un col (15) dont l'alésage intérieur, qui sert de passage pour un organe de commande (18) de la rotation de l'obturateur, prolonge la cavité (4) et présente des dimensions transversales supérieures à celles de l'obturateur(5). Selon l'invention, l'obturateur (5) comporte, en dehors de ses zones couvertes par des ouvertures des raccords (2, 3), des méplats (30, 31) qui lui confèrent sensiblement la même configuration que le volume délimité à l'intérieur du corps (1) par la paroi de la cavité (4) et les plans (P₁, P₂) des faces libres des sièges étanches (6, 7).

Dans le cas d'un robinet à obturateur sphérique, celui-ci comporte deux méplats (30, 31) parallèles à l'un de ses plans équatoriaux et séparés d'une distance au plus égale à celle dont sont éloignés les plans (P₁, P₂) des faces libres des deux sièges (6, 7) de l'obturateur (5).

FIG.1

# Robinet à obturateur tournant perfectionné, procédé pour son assemblage et obturateur équipant un tel robinet

La présente invention se rapporte à un robinet du type comprenant un corps pourvu d'au moins deux raccords qui débouchent dans une cavité servant de logement à un obturateur tournant encastré à rotation libre entre des sièges étanches formés en saillie à l'intérieur de la cavité, respectivement autour des ouvertures des raccords,et percé de part en part d'au moins un canal apte à mettre en communication les deux raccords dans une position angulaire donnée de l'obturateur, le corps comportant en outre un col dont l'alésage intérieur, qui sert de passage pour un organe de commande de la rotation de l'obturateur, prolonge la cavité et présente des dimensions transversales supérieures à celles de l'obturateur.

On connaît tout l'intérêt des robinets de ce type dans lesquels l'obturateur tournant peut être introduit à travers le col de réception de l'organe de commande pour être mis en place entre ses sièges, à l'intérieur de la cavité du corps. De cette façon, on peut en effet réaliser des robinets à corps monobloc, dont l'assemblage est grandement simplifié vis-à-vis des robinets dont le corps est formé de deux pièces boulonnées l'une sur l'autre autour de l'obturateur.

Toutefois, étant donné que l'obturateur doit être encastré entre les sièges qui font saillie à l'intérieur de la cavité, un tel assemblage d'un robinet à corps monobloc n'est réalisable qui si ces sièges peuvent être écrasés temporairement. C'est pourquoi, dans les robinets actuels à corps monobloc, les sièges de l'obturateur sont constitués par des joints d'étanchéité élastiques, le plus souvent en caoutchouc, qui sont également mis en place dans leurs logements respectifs à travers le col du corps du robinet, avant le montage de l'obturateur.

Or, on sait que dans certaines applications impliquant par exemple le passage de produits chimiques corrosifs ou de fluides sous pression élévée à travers le robinet, ces joints élastiques ne peuvent convenir car ils se détérioreraient ou se déformeraient très vite et ne pourraient plus de ce fait remplir leur fonction d'étanchéité. En conséquence, il s'est avéré nécessaire de pourvoir les robinets soumis à de telles conditions de service,de joints ou de sièges d'étanchéité faits en une matière indéformable et résistant à la corrosion, telle que le polytétrafluoroéthylène. Mais bien évidemment, de par leur incompressibilité, de tels joints ou sièges d'étanchéité ne peuvent équiper les robinets à corps monobloc actuellement sur le marché.

La présente invention se propose de remédier à cet inconvénient et, pour ce faire, elle a pour objet un robinet du type spécifié en préambule qui se caractérise en ce que son obturateur comporte, en dehors de ses zones couvertes par les ouvertures des raccords, des méplats qui lui confèrent sensiblement la même configuration que le volume délimité à l'intérieur du corps par la paroi de la cavité et les plans des faces libres des sièges étanches.

Dans un mode de réalisation particulier de ce robinet, dans lequel le corps est pourvu de deux raccords débouchant dans la cavité, respectivement à l'intérieur de deux sièges étanches à faces libres parallèles, entre lesquels est encastré un obturateur tournant de forme générale sphérique, l'obturateur tournant comporte deux méplats parallèles à l'un de ses plans équatoriaux et séparés d'une distance au plus égale à celle dont sont éloignés les plans des faces libres des deux sièges de l'obturateur.

En outre, dans les robinets les plus courants, dans lesquels le corps est pourvu de deux raccords alignés dont l'axe commun passe par le centre de l'obturateur tournant qui, de son côté, présente un canal diamétral et comporte un creux possédant un axe sensiblement perpendiculaire à celui de ce dernier et recevant l'extrémité de forme complémentaire de l'organe de commande de la rotation de l'obturateur, les deux méplats de l'obturateur tournant sont perpendiculaires à l'axe du creux, lequel se trouve sensiblement au centre de l'un des deux méplats.

On comprendra que, grâce à de telles dispositions, on peut dans un robinet à corps monobloc, mettre en place l'obturateur à travers le col de réception de l'organe de commande, sans avoir à écraser ou comprimer les joints d'étanchéité.

En effet, pour réaliser l'assemblage d'un tel robinet, il suffit, selon un procédé, qui fait également l'objet de la présente invention, de présenter l'obturateur au-dessus du col du corps de robinet en l'orientant de telle manière que ses méplats soient à l'aplomb des faces libres des sièges, avant de l'engager entre ces derniers, à l'intérieur de la cavité, et de le placer dans sa position de montage définitive par une succession de rotations angulaires autour de son centre, l'organe de commande et ses différents accessoires étant ensuite éventuellement montés à l'intérieur du col.

Selon un mode d'exécution préféré de ce procédé, on oriente l'obturateur au-dessus du col de telle façon qu'en plus l'axe de son canal diamétral soit sensiblement confondu avec celui dudit col, puis après l'avoir engagé entre les sièges, on lui fait subir une première rotation angulaire de 90° autour de l'axe de son canal, suivie d'une seconde rotation angulaire de 90° autour de l'axe des deux raccords de façon à faire apparaître le premier creux de l'obturateur à travers l'alésage du col du corps.

Avantageusement, on peut engager l'obturateur tournant entre les sièges à l'aide d'un premier outil encastré dans son canal diamétral, puis lui faire subir sa première rotation angulaire de 90° à l'aide de ce même outil et, après avoir retiré ce dernier, faire enfin subir à l'obturateur sa seconde rotation angulaire de 90° à l'aide d'un deuxième outil encastré dans un second creux qui est ménagé à la surface de l'obturateur en un point décalé angulairement de 90° par rapport au premier creux et qui apparaît ainsi à travers l'un des deux raccords.

Il est aisé de comprendre que l'on peut de cette façon automatiser le procédé d'assemblage selon l'invention, à l'aide d'une machine équipée des premier et deuxième outils susmentionnés et pouvant fonctionner à cadence élevée. On ajoutera ici que pour favoriser l'encastrement du premier outil dans le canal de l'obturateur, il sera avantageux de donner à ce dernier une section transversale polygonale et de préférence hexagonale.

En conclusion, le procédé objet de l'invention permet de réaliser des robinets sphériques à corps monobloc, dans lesquels les sièges de l'obturateur peuvent être équipés de joints d'étanchéité faits en une matière indéformable résistant à la corrosion, et de préférence en polytétrafluoréthylène qui présente au surplus un faible coefficient de frottement favorisant la rotation de l'obturateur. Il est à noter ici que ces joints indéformables peuvent, tout comme les joints élastiques des robinets actuels, être très facilement mis en place à travers le col du corps du robinet, avant le montage dans celui-ci de l'obturateur. On peut donc, grâce à l'invention, réduire le coût de fabrication des robinets à joints indéformables et ce, d'autant plus que leur procédé d'assemblage peut être automatisé.

La présente invention a aussi pour objet un obturateur tournant pour robinets, présentant la structure qui vient d'être décrite.

Un mode de réalisation de la présente invention va maintenant être décrit plus en détails, mais uniquement à titre d'exemple non limitatif, en référence aux dessins annexés dans lesquels :

-la figure 1 est une vue latérale, partiellement en coupe longitudinale, d'un robinet conforme à ce mode de réalisation de l'invention ;

-la figure 2 est une vue en perspective de l'obturateur du robinet de la figure 1 représenté à plus petite échelle ;

-la figure 3 est une vue éclatée de ce robinet qui en montre les différents éléments constitutifs représentés en coupe à gauche de l'axe ; et

-les figures 4 à 6 sont des vues en coupe illustrant les phases successives de mise en place de l'obturateur entre ses deux sièges.

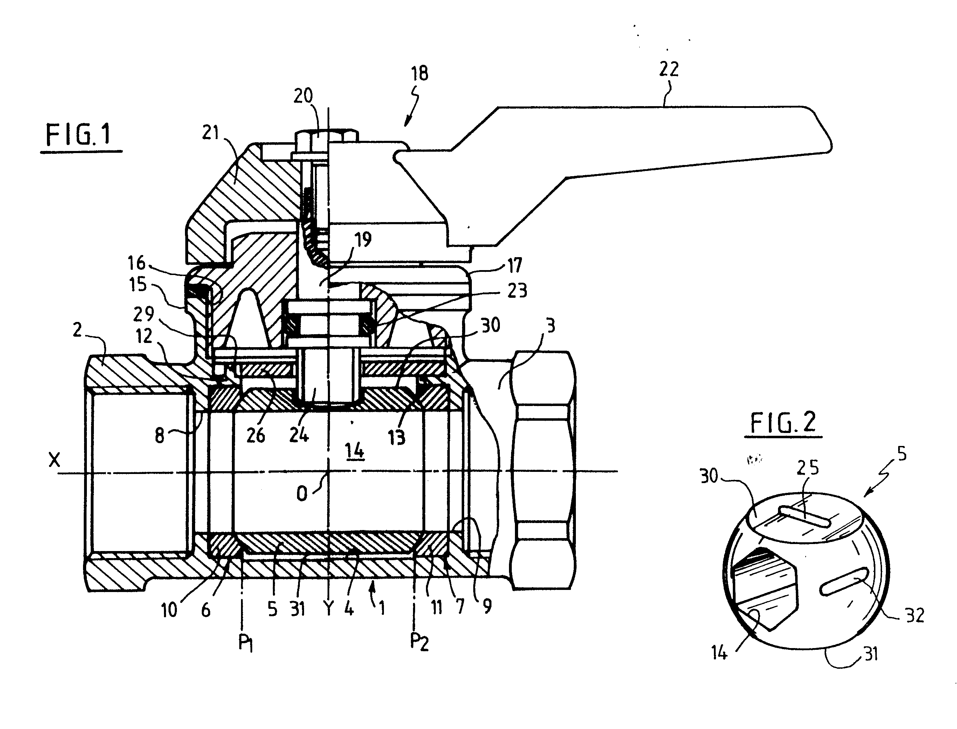

Le robinet représenté sur la figure 1, qui est en fait un robinet d'arrêt dit "sphérique", comprend, de manière connue en soi, un corps monobloc en laiton 1 pourvu d'un raccord d'entrée 2 et d'un raccord de sortie 3 pour le liquide soumis à l'action du robinet. Ces deux raccords 2 et 3, qui sont alignés, débouchent dans une cavité 4 ménagée au centre du corps 1 et leur axe commun X passe par le centre 0 d'un obturateur métallique 5 de forme générale sphérique qui est logé dans la cavité 4.

L'obturateur 5 est plus précisément encastré à rotation libre entre deux sièges étanches 6 et 7 formés en saillie à l'intérieur de la cavité 4, respectivement autour des ouvertures 8 et 9 par lesquelles les raccords 2 et 3 débouchent dans cette dernière. Chaque siège 6 ou 7 se compose d'un joint d'échanchéité annulaire 10 ou 11 retenu au contact de l'obturateur dans une bague 12 ou 13 venue de matière avec le corps 1. Les joints 10 et 11 sont réalisés en une matière indéformable résistant à la corrosion et, de préférence, en polytétrafluoroéthylène. On notera encore ici que les plans $P_1$ et $P_2$ des faces libres des sièges 6 et 7 sont parallèles entre eux.

L'obturateur 5 est quant à lui percé de part en part d'un canal diamétral 14 qui, dans une position angulaire donnée de l'obturateur représentée sur la figure 1, met en communication les deux raccords 2 et 3.

Comme on peut encore le voir sur la figure 1, le corps 1 du robinet comporte un col 15 dont l'alésage intérieur, de forme générale cylindrique, débouche dans la cavité 4 et présente un axe Y sensiblement perpendiculaire à l'axe X des deux raccords 2, 3, le diamètre intérieur du col 15 étant en outre supérieur à la dimension transversale maximum de l'obturateur 5. Le col 15 est par ailleurs pourvu intérieurement d'un filetage 16 dans lequel vient se visser un bouchon 17 supportant l'organe de commande 18 de la rotation de l'obturateur 5.

Cet organe de commande 18 se compose essentiellement d'une tige de manoeuvre cylindrique 19 traversant à rotation libre un perçage axial ménagé au centre du bouchon 17. A son extrémité qui se dresse à l'extérieur du bouchon 17, la tige de manoeuvre 19 est solidarisée, par une vis 20, à la tête 21 de l'organe de commande 18, qui comporte une manette 22 et coiffe le bouchon 17 sans toutefois venir au contact de celui-ci. A son autre extrémité et en-dessous d'une bague de friction et d'étanchéité 23 favorisant sa rotation à l'intérieur du bouchon 17, la tige de manoeuvre présente un doigt d'entraînement 24 de section rectangulaire, qui vient s'emboîter dans un creux 25 de même largeur formé dans la surface de l'obturateur 5, l'axe de ce creux étant confondu avec l'axe Y du col 15.

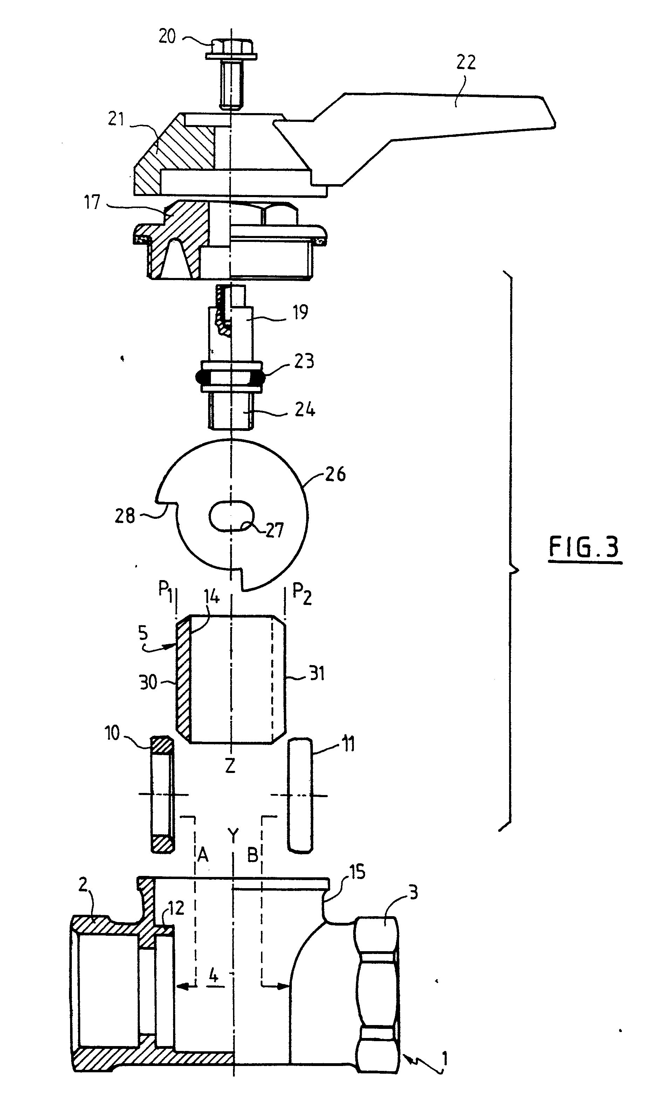

La figure 1 montre encore qu'avant d'atteindre l'obturateur 5, le doigt d'entraînement 24 de la tige de manoeuvre 19 traverse une plaquette circulaire 26 reposant sur les bagues 12, 13. Comme le montre mieux la figure 3 qui la représente en plan, cette plaquette présente une lumière centrale 27 dans laquelle le doigt 24 est encastré ainsi qu'une découpe périphérique 28 s'étendant sur un quart de sa circonférence. Par cette découpe 28, la plaquette 26 coopère avec un ergot 29 formé sur la bague 12 pour, lorsqu'on agit sur la manette 22, limiter à un quart de tour la rotation de la tige de manoeuvre 19 et donc celle de l'obturateur 5, entre les positions d'ouverture et de fermeture de ce dernier.

Selon la caractéristique première de l'invention, illustrée à la fois par les figures 1, 2 et 3, l'obturateur 5 comporte deux méplats 30 et 31 perpendiculaires à l'axe Y du creux 25 et séparés en outre d'une distance sensiblement égale à celle dont sont éloignés les plans $P_1$ et $P_2$ des faces libres des sièges 6 et 7, le creux 25 étant formé sensiblement au centre de l'un de ces méplats 30, comme le montre la figure 2. En fait, l'obturateur selon l'invention, pourvu des deux méplats 30 et 31, est produit à partir d'un obturateur classique en forme de boule dont on retranche deux calottes sphériques de long de deux plans parallèles situés de part de d'autre de son canal diamétral et à peu de distance de celui-ci.

On observera encore sur la figure 2 que, selon deux autres caractéristiques de l'invention, l'obturateur 5 comporte à sa surface un second creux 32 décalé angulairement de 90° par rapport au premier 25 et son canal diamétral 14 présente une section hexagonale.

Le mode d'assemblage du robinet selon l'invention va maintenant être décrit en référence aux figures 3 à 6.

Dans un premier temps, on introduit les deux joints d'étanchéité 10 et 11 dans la cavité 4 du corps monobloc nu 1, à travers le col 15 de celui-ci et on les met en place à l'intérieur des bagues 12 et 13 comme l'indiquent les flèches A et B de la figure 3.

Puis, on présente l'obturateur 5 au-dessus du col 15, en l'orientant de telle manière que ses méplats 30 et 31 soient à l'aplomb des faces libres $P_1$, $P_2$ des sièges 6, 7 ainsi formés et que l'axe Z de son canal diamétral soit sensiblement confondu avec l'axe Y du col 15. Dans cette position angulaire l'obturateur 5 présente la même configuration que le volume délimité à l'intérieur du corps 1 par la paroi de la cavité 4 et les plans $P_1$ et $P_2$ des faces libres des sièges 6 et 7, si bien qu'on peut ensuite l'engager entre ces derniers par un simple déplacement vertical, à l'aide d'un outil mobile (non représenté) pourvu d'une tête cylindrique encastrée dans le canal hexagonal 14.

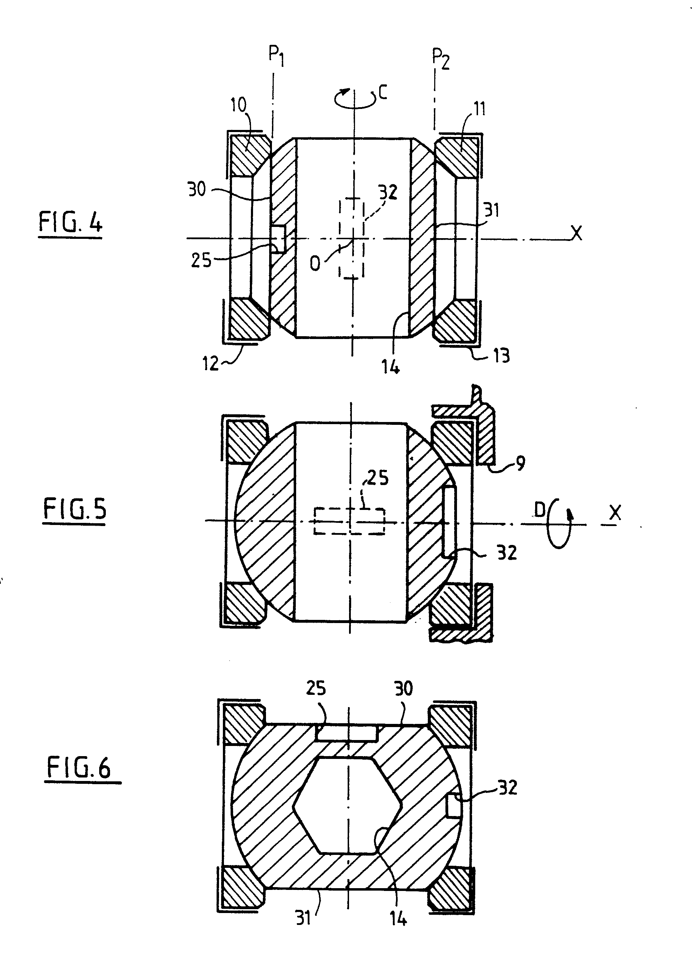

L'obturateur 5 étant ainsi dans la position représentée sur la figure 4, on le fait ensuite tourner, toujours à l'aide de cet outil, de 90° autour de l'axe Z de son canal 14, comme l'indique la flèche C, pour le placer dans la position représentée sur la figure 5, dans laquelle il se trouve encastré entre les deux joints 10 et 11. Dans cette position, le second creux 32 apparaît alors à travers l'ouverture 9 du raccord de sortie.

Dès lors, pour amener l'obturateur dans sa position définitive de montage illustrée par la figure 6, il suffit, après avoir retiré le premier outil, de faire tourner l'obturateur de 90° autour de l'axe Y des deux raccords, dans le sens de la flèche D de la figure 5, à l'aide d'un deuxième outil (non représenté) encastré dans le second creux 32 à travers l'ouverture 9. Le premier creux 25 apparaît ainsi à travers le col 15 et l'on termine alors l'assemblage du robinet en montant la plaquette circulaire 26, la tige de manoeuvre 19, le bouchon 17 et la tête 21 dans l'ordre représenté sur la figure 2.

Il est à noter qu'après cet assemblage, les méplats 30 et 31 se trouvent respectivement au-dessus et au-dessous des ouvertures 8 et 9, quelle que soit la position angulaire de l'obturateur 5. Ainsi, malgré la présence de ces méplats, le robinet selon l'invention présente les mêmes garanties de fonctionnement qu'un robinet classique à obturateur entièrement sphérique et est en particulier à l'abri des fuites.

**Revendications**

1. Robinet du type comprenant un corps (1) pourvu d'au moins deux raccords (2, 3) qui débouchent dans une cavité (4) servant de logement à un obturateur tournant (5) encastré à rotation libre entre des sièges étanches (6, 7) formés en saillie à l'intérieur de la cavité, respectivement autour des ouvertures (8, 9) des raccords et percé de part en part d'au moins un canal (14) apte à mettre en communication les deux raccords (2, 3) dans une position anguliare donnée de l'obturateur (5), le corps (1) comportant en outre un col (15) dont l'alésage intérieur, qui sert de passage pour un organe de commande (18) de la rotation de l'obturateur, prolonge la cavité (4) et présente des dimensions transversales supérieures à celles de l'obturateur (5), caractérisé en ce que l'obturateur - (5) comporte, en dehors de ses zones couvertes par les ouvertures des raccords (2, 3), des méplats (30, 31) qui lui confèrent sensiblement la même configuration que le volume délimité à l'intérieur du corps (1) par la paroi de la cavité (4) et les plans - ($P_1$, $P_2$) des faces libres des sièges étanches (6, 7).

2. Robinet selon la revendication 1, dans lequel le corps (1) est pourvu de deux raccords (2, 3) débouchant dans la cavité (4), respectivement à l'intérieur de deux sièges étanches (6, 7) à faces libres parallèles, entre lesquels est encastré un obturateur tournant de forme générale sphérique - (5), caractérisé en ce que l'obturateur tournant (5) comporte deux méplats (30, 31) parallèles à un plan équatorial de celui-ci et séparés d'une distance au plus égale à celle dont sont éloignés les plans ($P_1$, $P_2$) des faces libres des deux sièges (6, 7) de l'obturateur (5).

3. Robinet selon la revendication 2, dans lequel le corps (1) est pourvu de deux raccords alignés (2, 3) dont l'axe commun (X) passe par le centre - (0) de l'obturateur tournant (5) qui, de son côté, présente un canal diamétral (14) et comporte un creux (25) possédant un axe sensiblement perpendiculaire à celui de ce dernier et recevant l'extrémité (24) de forme complémentaire de l'organe de commande (18) de la rotation de l'obturateur, caractérisé en ce que les deux méplats (30, 31) de l'obturateur tournant (5) sont perpendiculaires à l'axe du creux (25), lequel se trouve sensiblement au centre de l'un des deux méplats (30).

4. Robinet selon la revendication 3, caractérisé en ce que l'obturateur tournant (5) présente à sa surface un second creux (32) décalé angulairement de 90° par rapport au premier (25).

5. Procédé pour assembler un robinet tel que défini dans l'une quelconque des revendications 1 à 4, dans lequel la cavité (4) est préalablement pourvu des sièges (6, 7) entre lesquels l'obturateur tournant (5) doit être encastré, caractérisé en ce que l'on commence par présenter l'obturateur (5) au-dessus du col (15) du corps (1) du robinet, en l'orientant de telle manière que ses méplats (30, 31) soient à l'aplomb des faces libres ($P_1$, $P_2$) des sièges (6, 7), avant de l'engager entre ces derniers, à l'intérieur de la cavité (4), et de le placer dans sa position de montage définitive par une succession de rotations angulaires autour de son centre (0), l'organe de commande (18) et ses différents accessoires étant ensuite éventuellement montés à l'intérieur du col (15).

6. Procédé selon la revendication 5, pour assembler un robinet tel que défini dans la revendication 3, caractérisé en ce que l'on oriente l'obturateur (5) au-dessus du col (15) de telle façon qu'en plus, l'axe de son canal diamétral (14) soit sensiblement confondu avec celui (Y) dudit col (15), puis après l'avoir engagé entre les sièges (6, 7), on lui fait subir une première rotation angulaire de 90° autour de l'axe de son canal, suivie d'une second rotation angulaire de 90° autour de l'axe (X) des deux raccords (2, 3) de façon à faire apparaître le premier creux (25) de l'obturateur (5) à travers l'alésage du col (15) du corps (1).

7. Procédé selon la revendication 6, pour assembler un robinet tel que défini dans la revendication 4, caractérisé en ce que l'on engage l'obturateur tournant (5) entre les sièges (6, 7) à l'aide d'un premier outil encastré dans son canal diamétral - (14), puis on lui fait subir sa première rotation angulaire de 90° à l'aide de ce même outil et, après avoir retiré ce dernier, on fait enfin subir à l'obturateur sa seconde rotation angulaire de 90° à l'aide d'un deuxième outil encastré dans le second creux (32) de l'obturateur, qui apparaît à travers l'un des deux raccords (2 ou 3).

8. Robinet selon l'une quelconque des revendications 1 à 4, caractérisé en ce que le canal (14) de l'obturateur tournant (5) présente une section transversale polygonale, et de préférence hexagonale.

9. Robinet selon l'une quelconque des revendications 1 à 4 et 8, dans lequel les sièges (6, 7) de l'obturateur tournant comprennent chacun un joint d'étanchéité annulaire (10, 11) retenu dans un logement (12, 13) solidaire du corps (1), caractérisé en ce que les joints d'étanchéité (10, 11) sont en une matière indéformable résistant à la corrosion.

10. Robinet selon la revendication 9, caractérisé en ce que les joints d'étanchéité (10, 11) sont en polytétrafluoroéthylène.

11. Robinet selon l'une quelconque des revendications 1 à 4 et 8 à 10, caractérisé en ce que le corps (1) est monobloc.

12. Obturateur tournant destiné à équiper un robinet tel que décrit dans l'une quelconque des revendications 1 à 4 et 8 à 11.

FIG.1

FIG.2

FIG.3

FIG. 4

FIG.5

FIG.6

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl.4) |
|---|---|---|---|
| X | GB-A- 978 481 (TRIANGLE VALVE)<br><br>* En entier *<br><br>--- | 1-3,5,<br>6,11,<br>12 | F 16 K 5/06<br>F 16 K 27/06 |
| A | EP-A-0 051 214 (TUBARO)<br>* Page 6, lignes 9-24 *<br><br>--- | 9,10 | |
| A | US-A-3 038 489 (ALLEN)<br><br>----- | | |

DOMAINES TECHNIQUES
RECHERCHES (Int. Cl.4)

F 16 K

Le présent rapport de recherche a été établi pour toutes les revendications

| Lieu de la recherche | Date d'achèvement de la recherche | Examinateur |
|---|---|---|
| LA HAYE | 07-05-1986 | VERELST P.E.J. |